# EUROPEAN PATENT SPECIFICATION

(11) **EP 3 617 524 B1**
(45) Date of publication and mention of the grant of the patent: **23.03.2022**
(21) Application number: 19188251.3
(22) Date of filing: 25.07.2019
(51) Int. Cl.: F04D 27/02, F02B 37/24

(54) **METHOD AND SYSTEM FOR CONTROLLING A VARIABLE-GEOMETRY COMPRESSOR**
VERFAHREN UND SYSTEM ZUR STEUERUNG EINES KOMPRESSORS MIT VARIABLER GEOMETRIE
PROCÉDÉ ET SYSTÈME DE COMMANDE D'UN COMPRESSEUR À GÉOMÉTRIE VARIABLE

(30) Priority: 27.08.2018 US 201816112837
(43) Date of publication of application: 04.03.2020
(73) Proprietor: Garrett Transportation I Inc., Torrance, CA 90504 (US)
(72) Inventor: de Araujo, Louis Philippe, Torrance, CA 90504 (US); Mohtar, Hani, Torrance, CA 90504 (US); Pees, Stephane, Torrance, CA 90504 (US); Roux, Jean-Sebastien, Torrance, CA 90504 (US)
(74) Representative: LKGlobal UK Ltd.

(56) References cited:
- DE-A1-102008 052 256
- JP-A- 2011 144 710
- US-A1- 2008 276 613
- US-A1- 2010 263 391
- US-A1- 2017 152 862

## Description

### BACKGROUND OF THE INVENTION

The present disclosure relates to compressors, such as used in turbochargers (which broadly includes exhaust gas-driven turbochargers, e-turbochargers that are electricmotor driven or assisted, and superchargers), and more particularly relates to compressors having a variable-geometry mechanism that is adjustable for regulating flow rate through the compressor.

An exhaust gas-driven turbocharger is a device used in conjunction with an internal combustion engine for increasing the power output of the engine by compressing the air that is delivered to the air intake of the engine to be mixed with fuel and burned in the engine. A turbocharger comprises a compressor wheel mounted on one end of a shaft in a compressor housing and a turbine wheel mounted on the other end of the shaft in a turbine housing. Typically the turbine housing is formed separately from the compressor housing, and there is yet another center housing connected between the turbine and compressor housings for containing bearings for the shaft. The turbine housing defines a generally annular chamber that surrounds the turbine wheel and that receives exhaust gas from an engine. The turbine assembly includes a nozzle that leads from the chamber into the turbine wheel. The exhaust gas flows from the chamber through the nozzle to the turbine wheel and the turbine wheel is driven by the exhaust gas. The turbine thus extracts power from the exhaust gas and drives the compressor. The compressor receives ambient air through an inlet of the compressor housing and the air is compressed by the compressor wheel and is then discharged from the housing to the engine air intake.

The operating range of the compressor is an important aspect of the overall performance of the turbocharger. The operating range is generally delimited by a surge line and a choke line on an operating map for the compressor. The compressor map is typically presented as pressure ratio (discharge pressure *Pout* divided by inlet pressure *Pin)* on the vertical axis, versus corrected mass flow rate on the horizontal axis. The choke line on the compressor map is located at high flow rates and represents the locus of maximum mass-flow-rate points over a range of pressure ratios; that is, for a given point on the choke line, it is not possible to increase the flow rate while maintaining the same pressure ratio because a choked-flow condition occurs in the compressor.

The surge line is located at low flow rates and represents the locus of minimum mass-flow-rate points without surge, over a range of pressure ratios; that is, for a given point on the surge line, reducing the flow rate without changing the pressure ratio, or increasing the pressure ratio without changing the flow rate, would lead to surge occurring. Surge is a flow instability that typically occurs when the compressor blade incidence angles become so large that substantial flow separation arises on the compressor blades. Pressure fluctuation and flow reversal can happen during surge.

In a turbocharger for an internal combustion engine, compressor surge may occur when the engine is operating at high load or torque and low engine speed, or when the engine is operating at a low speed and there is a high level of exhaust gas recirculation (EGR). Surge can also arise when an engine is suddenly decelerated from a high-speed condition. Expanding the surge-free operation range of a compressor to lower flow rates is a goal often sought in compressor design.

One scheme for shifting the surge line of a centrifugal compressor to the left (i.e., surge is delayed to a lower flow rate at a given pressure ratio) and for shifting the choke flow line to the right (i.e., choke flow increases to a higher flow rate at a given pressure ratio) is to employ a variable-geometry (VG) mechanism in the compressor inlet. The variable-geometry mechanism is adjustable between a maximum flow-area position and a minimum flow-area position. The surge line can be shifted to lower flows by adjusting the VG mechanism to the minimum flow-area position. Applicant is the owner of co-pending applications disclosing various mechanisms of this type, see, e.g., Application Nos. 14/537,339; 14/532,278; 14/642,825; 14/573,603; and 14/551,218.

It is also possible to position the VG mechanism downstream of the compressor and achieve similar results. US 2010/263391 A1 and DE 10 2008 052256 A1 disclose other methods from the prior art for controlling a VG mechanism.

### BRIEF SUMMARY OF THE DISCLOSURE

The present invention describes a method for controlling a variable-geometry mechanism for a compressor as set forth in claim 1, a computer program product as set forth in claim 9 and a computer-readable storage medium as set forth in claim 10. The VG mechanism is located such that fluid passing through the VG mechanism also passes through and is compressed by the compressor. The VG mechanism is adjustable over a range of different setpoints to adjust an effective flow area for the fluid that passes through the VG mechanism and through the compressor, the VG mechanism being adjustable between a minimum flow area setpoint and a maximum flow area setpoint and being adjustable to at least one intermediate flow area setpoint between the minimum and the maximum flow area setpoints. The method comprises the steps of:
predefining a VG setpoint map comprising optimum VG setpoints over a range of compressor pressure ratios and over a range of compressor corrected flow rates, each VG setpoint corresponding to a unique operating point location on a compressor map for the compressor, and being optimized based on at least one predefined optimization criterion for the compressor;
determining a location of an operating point of the compressor on the compressor map;
consulting the VG setpoint map based on the location of the operating point so as to determine an optimum VG setpoint for the VG mechanism; and
adjusting the VG mechanism to the optimum VG setpoint.

In some embodiments of the invention, at least some of the VG setpoints in the VG setpoint map are optimized based on compressor efficiency as the predefined optimization criterion.

According to the invention, the VG setpoints in a first region of the compressor map are optimized based on a first optimization criterion, and the VG setpoints in a second region of the compressor map are optimized based on a second optimization criterion.

In one embodiment, the first optimization criterion comprises compressor efficiency. Whether or not the first optimization criterion comprises efficiency, the second optimization criterion can comprise compressor flow stability.

The method can further comprise employing a predictive scheme to predict the location of the operating point on the compressor map, taking into account a time lag required for adjusting the VG mechanism to a new VG setpoint.

In one embodiment, the VG mechanism is infinitely adjustable between the minimum and maximum flow area setpoints, and the predefined VG setpoint map is configured to accommodate such infinite adjustability.

In another embodiment, the VG mechanism is adjustable to only a plurality of discrete VG setpoints, and the predefined VG setpoint map is configured to accommodate such discrete adjustability.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 is a diagrammatic depiction of a first embodiment of a compressor having a VG mechanism, wherein the VG mechanism is located upstream of the compressor;
FIG. 1A is a diagrammatic depiction of a second embodiment of a compressor having a VG mechanism, wherein the VG mechanism is located downstream of the compressor;
FIG. 2 is an exemplary VG mechanism flow characteristic, showing effective flow area of the mechanism verses mechanism position;
FIG. 3 is a diagrammatic depiction of a compressor map variation under VG operation, showing corrected flow rate on the horizontal axis verse compressor pressure ratio on the vertical axis, and including a dashed line with the VG mechanism set in the minimumarea position, a solid line with the VG mechanism set in the maximum-area position, and a series of intermediate dotted lines illustrating various intermediate positions (of which there may be an infinite number such that the VG mechanism is continuously variable) between the minimum and maximum positions;
FIG. 4 is another embodiment of a compressor map in the form of discrete points in an array, on which a minimum VG position line and a maximum VG position line have been placed;
FIG. 4A is a compressor map in accordance with the present invention that is divided into two regions that employ different optimization criteria in deriving the optimum VG setpoints in each region;
FIG. 5 shows an array of optimum VG setpoint positions corresponding to the discrete points on the map in FIG. 4;
FIG. 6 is a diagrammatic illustration of one embodiment of an engine control unit (ECU) that sends a VG setpoint to an actuator that actuates the VG mechanism;
FIG. 7 is a diagrammatic illustration of another embodiment of an engine control unit (ECU) that sends a VG setpoint to an actuator that actuates the VG mechanism;
FIG. 8 depicts a typical compressor map, and illustrates how the surge line is shifted to lower flows by adjustment of a VG mechanism.

### DETAILED DESCRIPTION OF THE DRAWINGS

The present invention now will be described more fully hereinafter with reference to the accompanying drawings, in which some but not all embodiments of the inventions are shown. Indeed, these inventions may be embodied in many different forms and should not be construed as limited to the embodiments set forth herein; the scope of the present invention is solely defined by the appended claims.

Like numbers refer to like elements throughout.

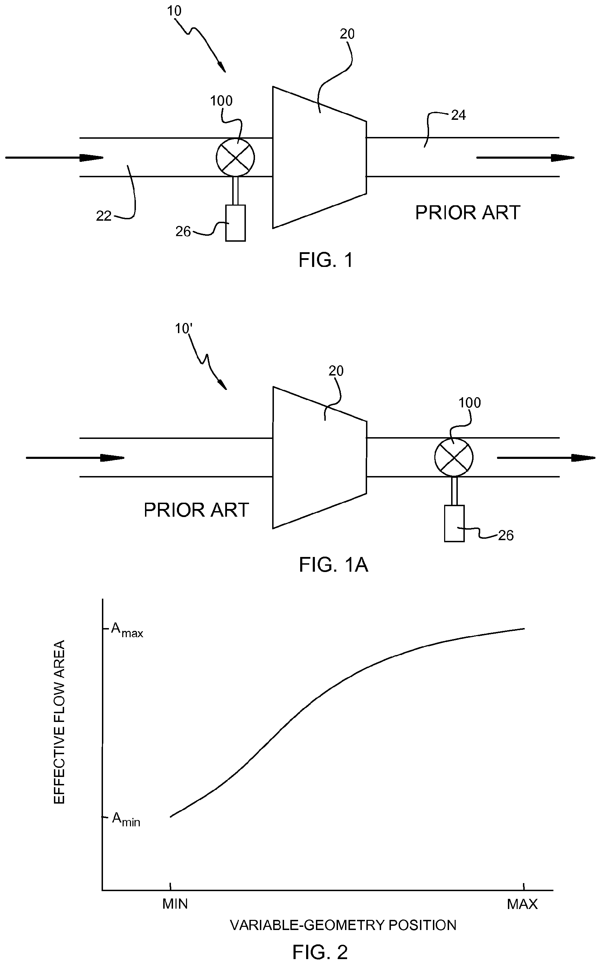

FIG. 1 represents one configuration of a variable-geometry (VG) compressor **10** to which the present inventions may be applied. Air is supplied to a compressor **20** by an inlet conduit or duct **22.** Air that has been pressurized by the compressor is discharged through a discharge duct **24.** Located upstream of the compressor (e.g., in the inlet duct **22)** is a VG mechanism **100** that is operable to regulate the flow rate into the compressor. The present inventions are not limited to any particular type of VG mechanism. Any VG mechanism that is effective for creating a selectively variable degree of restriction of the effective flow area through the mechanism can be used for purposes of the present inventions. As non-limiting examples of VG mechanisms that can be employed, the inlet-adjustment mechanisms disclosed in the commonly owned applications noted above can be used.

The VG mechanism is connected to a suitable actuator **26** that provides the motive force for adjusting the position of the VG mechanism. The actuator may be an electric motor such as a stepper motor, a pneumatic actuator, a hydraulic actuator, or any other suitable type of device capable of regulating the position of the VG mechanism.

FIG. 1A illustrates a second configuration of variable-geometry compressor **10'** to which the present inventions may be applied. The compressor **10'** includes the same or similar components as in the prior compressor configuration, except that the VG mechanism **100** is located downstream of the compressor, such as in the discharge duct **24.**

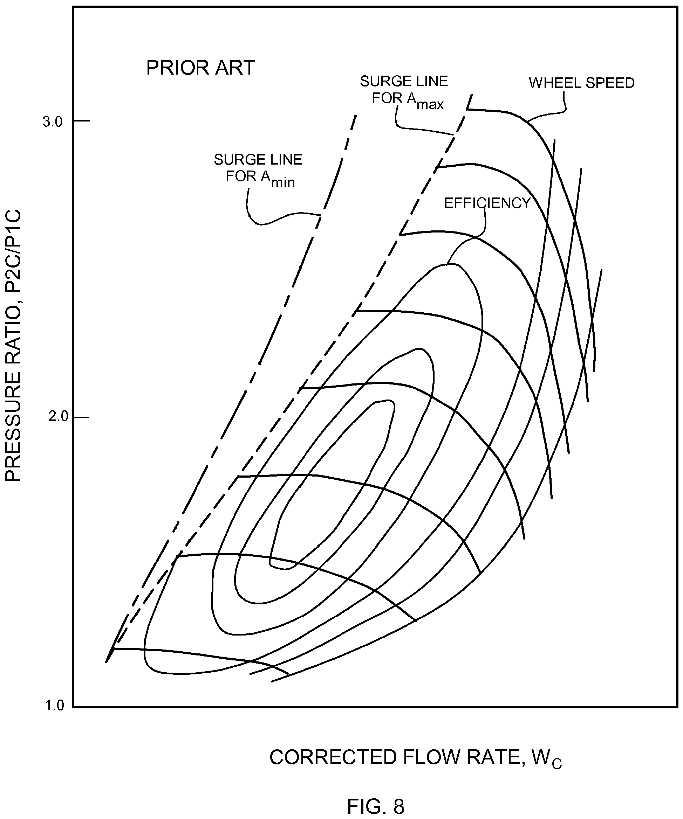

The present invention is directed to a method and system for regulating the position of the VG mechanism for any operating point on the compressor map. A primary objective of such regulation of the VG mechanism is to avoid compressor surge by effectively delaying surge to lower flow rates. As well known to those skilled in the art, a compressor map plots compressor pressure ratio on the vertical axis and corrected flow rate on the horizontal axis. FIG. 8 shows a typical compressor map for a compressor such as commonly used in turbochargers. As shown, constant wheel speed lines can be plotted on the map, and islands of compressor efficiency can be placed on the map as well. The surge line is an important aspect of compressor performance. As previously noted, surge is a flow instability that typically occurs at low flow rates when the compressor blade incidence angles become so large that substantial flow separation arises on the compressor blades. Pressure fluctuation and flow reversal can happen during surge. The surge line represents the locus of minimum mass-flow-rate points without surge, over a range of pressure ratios; that is, for a given point on the surge line, reducing the flow rate without changing the pressure ratio, or increasing the pressure ratio without changing the flow rate, would lead to surge occurring.

As described in the commonly owned applications of Applicant, the surge line can be shifted to lower flow rates by using a VG mechanism to reduce the effective flow area through which the fluid is delivered to the compressor wheel. For example, in a compressor such as shown in FIG. 1, the reduction in flow area through the VG mechanism **100** results in an increase in flow velocity approaching the leading edges of the compressor blades, thereby reducing the blade incidence angles and therefore preventing flow separation and instability. As an example, when the VG mechanism flow area is reduced from its maximum area Aₘₐₓ to its minimum area Aₘᵢₙ, the surge line on the map of FIG. 8 can be shifted to the left as shown.

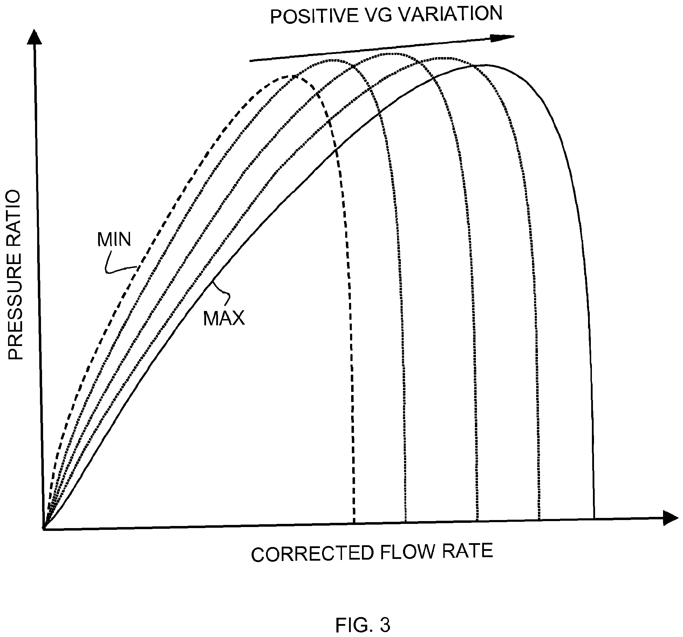

In accordance with the present invention, for every possible operating point on the compressor map (defined by the pressure ratio and corrected flow rate at that point), an optimum position of the VG mechanism is predefined based on an optimization criterion (or multiple criteria). FIG. 3 shows a compressor map on which a series of lines are plotted. The solid line is for the VG mechanism set in the position having maximum flow area, and the line is the locus of operating points at which the selected optimization criterion is optimized. Thus, for any point on the solid line, if the pressure ratio and corrected flow were held constant and the VG mechanism were adjusted to a flow area less than the maximum, the optimization criterion would decline (i.e., it would not be optimized). Likewise, for any point on the dashed line, if the pressure ratio and corrected flow were held constant and the VG mechanism were adjusted to a flow area greater than the minimum, the optimization criterion would decline.

It will also be appreciated, therefore, that if the VG mechanism is adjustable to a series (possibly of infinite number if the mechanism is infinitely or continuously adjustable over its range) of intermediate positions between the minimum and maximum area positions, there will be a series of lines intermediate between the solid and dashed lines on the map of FIG. 3, and those lines are represented by the dotted lines. Accordingly, this series of lines from maximum to minimum position can form a predefined set of optimum positions of the VG mechanism for all possible operating points on the compressor map.

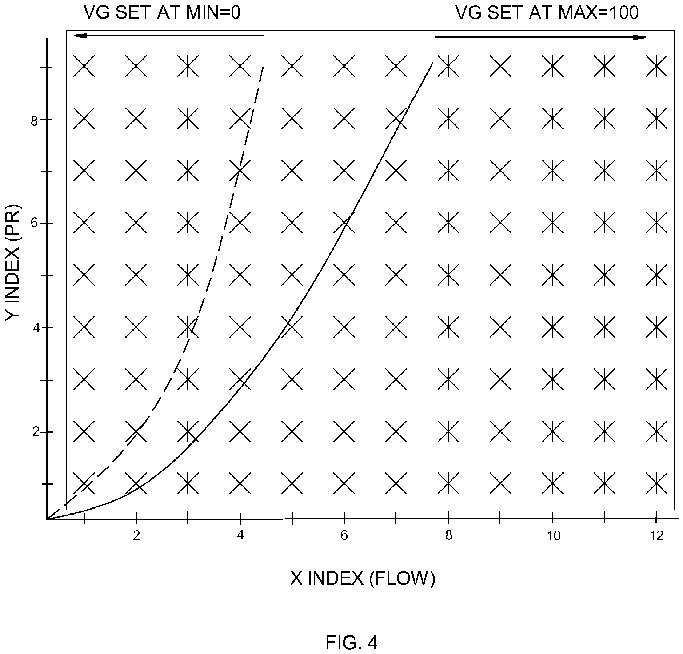

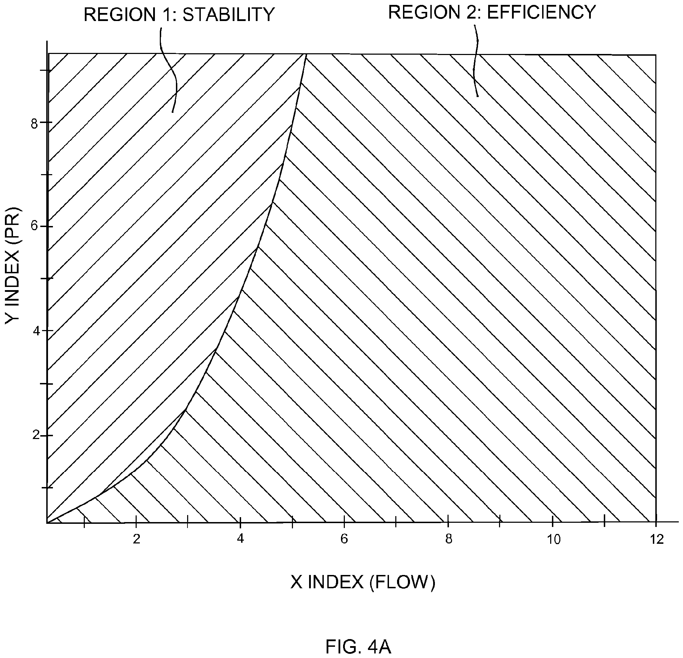

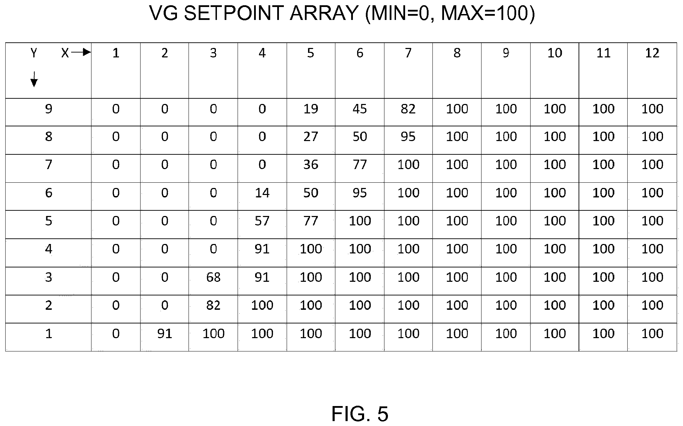

The predefined set of optimum VG positions can take various forms. FIG. 3 represents one possible form, having predefined optimum VG positions that can be stored in the memory of a controller of the VG mechanism in any of various ways, such as a table lookup format, as curve fits, etc. FIGS. 4 and 5 illustrate another possible form that the predefined set of optimum VG positions can take. FIG. 4 illustrates a compressor map space on which an array of discrete operating points have been predefined. Along the horizontal or X-axis (representing corrected flow rate) there are 12 index positions, and along the vertical or Y-axis (representing pressure ratio) there are 9 index positions. This example, of course, is simplified for purposes of the present drawings. In actual practice, the array would likely have a much larger number of X- and Y-index positions. On FIG. 4, the optimum location of the line at which the VG mechanism should be set to the minimum area position is shown, and likewise for the maximum area position. For the purposes of the present explanation, actual numerical values have been assigned to the VG setpoint, wherein the minimum area setpoint is defined as 0, and the maximum area setpoint is defined as 100.

FIG. 5 then shows a table or array of predefined optimum VG setpoints (i.e., flow area values) for all 108 (12 x 9) points on the map, where a suitable interpolation scheme can be used for points that fall between the minimum and maximum lines. Each VG setpoint in the table represents the VG position that optimizes the particular optimization criterion for that point. Compressor efficiency can be one optimization criterion, and other criteria can be used in addition to or instead of efficiency.

According to the invention, the same optimization criterion is not used for all points on the compressor map. The map is divided into two or more regions, and in each region a region-specific optimization criterion is used. As shown in FIG. 4A, one region (at higher flows in FIG. 4A) can employ compressor efficiency as the optimization criterion, while another region (at lower flows) can employ compressor flow stability as the optimization criterion, for example. It is also within the scope of the invention for a given point on the map to use a combination of multiple criteria, combined in a predefined manner. For instance, for a point on the map, the VG setpoint could be optimized based on a combination of compressor efficiency and flow stability quantified in a suitable fashion. When multiple criteria are employed, the criteria may respectively have differing weights (e.g., a weight of 40% for efficiency and a weight of 60% for flow stability).

Regardless of the particular form in which the predefined set of optimum VG positions or setpoints is represented and stored in the memory of the controller, the present invention is directed to a method and system in which a location of a current operating point of the compressor on the compressor map is ascertained, an optimum VG setpoint is determined for the operating point based on at least one optimization criterion, and the actuator for the VG mechanism is commanded to adjust the VG mechanism to the optimum setpoint. In accordance with the invention, the optimized VG setpoints are predefined for the entire compressor map and the resulting VG setpoint map is stored for use in regulating the VG mechanism.

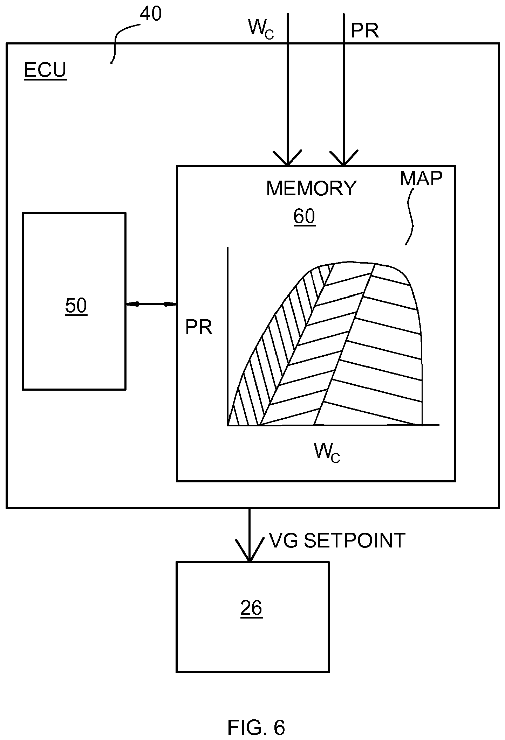

Implementation of the above-described control scheme can be accomplished in various ways. FIG. 6 illustrates the general architecture of a system for adjusting the VG mechanism by controlling its actuator **26.** The actuator **26** is in communication with a control unit **40,** which can be the engine control unit (ECU) as shown, or can be a separate control unit that may be in communication with the ECU. The control unit comprises a processor **50** (such as a microprocessor) and includes a memory **60** (such as non-volatile ROM, PROM, EPROM, or EEPROM memory) and interfaces for communicating with other devices in the system. The memory is programmed (e.g., in hardware and/or firmware and/or software) with control instructions that are executed by the processor **50** for carrying out the functions of the control unit.

The ECU receives inputs from various engine sensors and turbocharger sensors and control various engine and turbocharger actuators. The engine sensors may be disposed at various points in the engine to measure or otherwise determine corresponding engine parameters. Examples of engine sensors may include a throttle position sensor, air temperature sensor, engine revolutions per minute (RPM) sensor, engine load sensor, accelerator pedal position sensor and/or others. The engine actuators may include various relays, solenoids, ignition coils, or other electrically operable devices that may be used to control corresponding engine parameters. The turbocharger sensors may include sensors for measuring turbocharger rotational speed, compressor inlet pressure, compressor discharge pressure, compressor corrected flow rate, and other parameters.

As shown in FIG. 6, the ECU **40** includes an antisurge control module for regulating the position of the VG mechanism. The antisurge control module may be any means such as a device or circuitry embodied in hardware, software or a combination of hardware and software that is configured to perform the corresponding functions of the antisurge control module as described herein. In some embodiments, the antisurge control module may be configured to augment ECU capabilities with respect to surge prevention by identifying engine conditions under which action is to be taken for antisurge activity and with respect to taking or directing actions (e.g., via control of the actuator **26** for the VG mechanism) with respect to antisurge activity. As such, in an exemplary embodiment, the antisurge control module may merely provide additional functionality to the ECU **40.** However, in some embodiments, the antisurge control module may be a separate unit from the ECU (i.e., the control unit **40** shown in FIG. 6 may not comprise the ECU but may be in communication with the ECU).

The memory device **60** may include, for example, volatile and/or non-volatile memory. The memory device **60** may be configured to store information, data, applications, modules, instructions, or the like for enabling the apparatus to carry out various functions in accordance with exemplary embodiments of the present invention. For example, the memory device 60 could be configured to buffer input data for processing by the processor **50.** According to the invention, the memory device **60** is configured to store instructions corresponding to an application for execution by the processor of the control unit **40.**

As noted, the processor **50** may be a processor of the ECU or a co-processor or processor of a separate antisurge control module. The processor may be embodied in a number of different ways. For example, the processor may be embodied as a processing element, a coprocessor, a controller, or various other processing means or devices including integrated circuits such as, for example, an ASIC (application specific integrated circuit), FPGA (field programmable gate array) a hardware accelerator or the like. The processor is configured to execute instructions stored in the memory device **60** or otherwise accessible to the processor. As such, whether configured by hardware or software methods, or by a combination thereof, the processor represents an entity capable of performing operations according to embodiments of the present invention while configured accordingly. Thus, for example, when the processor is embodied as an ASIC, FPGA or the like, the processor may be specifically configured hardware for conducting the operations described herein. Alternatively, as another example, when the processor is embodied as an executor of software instructions, the instructions may specifically configure the processor, which may otherwise be a general-purpose processing element if not for the specific configuration provided by the instructions, to perform the algorithms and/or operations described herein. However, in some cases, the processor **50** may be a processor of a specific device (e.g., the ECU) adapted for employing embodiments of the present invention by further configuration of the processor **50** by instructions for performing the algorithms and/or operations described herein (e.g., by addition of the antisurge control module).

The memory **60** of the control unit stores a compressor map, comprising a predefined set of optimum VG setpoints over the whole operating envelope of the compressor. In FIG. 6, the map is shown for a 3-position VG mechanism; that is, the VG mechanism is adjustable to only three positions: minimum, intermediate, and maximum flow area. The map thus depicts three regions representing the VG setpoint for each region. The VG mechanism is set in the minimum flow area position in the region of lowest flow rate, is set in the intermediate position in the region of intermediate flow rate, and is set in the maximum position in the region of highest flow rate. Alternatively, however, the map can be a map of the type exemplified by FIG. 3 or a map such as exemplified by FIG. 4. The map can be stored in any of various forms such as a look-up table, polynomial curve-fit lines, or any other suitable form. The control unit **40** receives inputs of (or computes based on inputs from other engine and turbocharger sensors) compressor corrected flow rate *W_{c}* and pressure ratio *PR.* The flow rate and pressure ratio can be continually sensed or computed from suitable sensors and the sensed or computed values can be sent to the control unit (e.g., at regular time-step intervals such as every 0.1 second or other suitably selected interval). The control unit uses these sensed parameters to decide what position the VG mechanism should be placed in, as further described below.

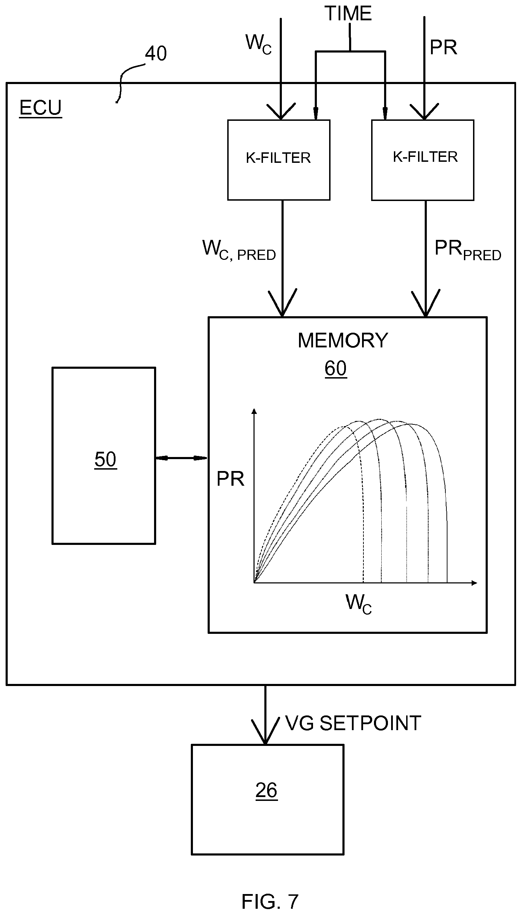

With reference now to FIG. 7, a further embodiment of the invention is described, which can compensate for a time lag associated with adjusting the VG mechanism. More particularly, suppose the operating point is moving rapidly on the compressor map, as can happen for example when the driver's foot suddenly releases the accelerator pedal at a high engine speed. In that case, at a given point along the path of movement of the operating point on the map, if the sensed pressure ratio and flow at that given moment in time were used to determine the optimum VG setpoint as described above, by the time the actuator were able to move the VG mechanism to the setpoint position, the operating point would already have moved to a different point on the map. The derived VG setpoint may not be appropriate for that point on the map. Accordingly, in some embodiments of the invention, a predictive scheme can be employed to predict where the operating point will be located when the VG mechanism is actually adjusted to the new position. For example, as illustrated in FIG. 7, for each of the sensed pressure ratio and sensed corrected flow rate, a Kalman filter is employed for predicting the pressure ratio and flow at the moment when the VG mechanism reaches the new adjusted position. The Kalman filters receive the instantaneous time corresponding to each sampling of pressure ratio and flow rate, and based on observed behaviors of these timevarying parameters, the Kalman filters predict the values that will apply when the VG mechanism reaches its adjusted position. The VG setpoint is then determined based on the predicted pressure ratio and predicted flow rate. In FIG. 7, the map is for an infinitely adjustable VG mechanism, but the map can be of any type and for any kind of VG mechanism.

From the foregoing description of certain embodiments of the invention, it will be appreciated that the control methods in accordance with the invention are suitable for either discretely variable or infinitely variable VG mechanisms. A discretely variable VG mechanism having as few as 3 setpoint positions (minimum area, intermediate area, and maximum area) is used in the present invention. Alternatively, a VG mechanism having a greater number of setpoints, or one having essentially an infinite number (or at least a very large number) of possible setpoint positions can also be used. It is merely necessary to configure the VG setpoint map and the control logic accordingly, depending on which type of VG mechanism is employed. When a discretely variable VG mechanism is employed, the method and system in accordance with the invention advantageously can include hysteresis in the regulation of the VG setpoint so as to avoid oscillating behavior of the mechanism when the compressor operating point falls on or close to a boundary between one VG setpoint and an adjacent VG setpoint.

Many modifications and other embodiments of the inventions set forth herein will come to mind to one skilled in the art to which these inventions pertain having the benefit of the teachings presented in the foregoing descriptions and the associated drawings. For example, in the described embodiments, the location of the compressor operating point on the compressor map is determined based on pressure ratio and corrected flow rate. Alternatively, however not covered by the claims, the operating point location can be determined in other ways (e.g. using turbocharger speed and flow), as known in the art. Therefore, it is to be understood that the inventions are not to be limited to the specific embodiments disclosed and that modifications and other embodiments are intended to be included within the scope of the appended claims.

## Claims

1. A method for controlling a variable-geometry (VG) mechanism for a compressor, the VG mechanism being located such that fluid passing through the VG mechanism also passes through and is compressed by the compressor, the VG mechanism being adjustable to adjust an effective flow area for the fluid that passes through the VG mechanism and through the compressor, the VG mechanism being adjustable between a minimum flow area setpoint and a maximum flow area setpoint and being adjustable to at least one intermediate flow area setpoint between the minimum and the maximum flow area setpoints, the method comprising:
predefining a VG setpoint map comprising optimum VG setpoints over a range of compressor pressure ratios and over a range of compressor corrected flow rates, each VG setpoint corresponding to a unique operating point location on a compressor map for the compressor, and being optimized based on at least one predefined optimization criterion for the compressor;
determining a location of an operating point of the compressor on the compressor map;
consulting the VG setpoint map based on the location of the operating point so as to determine an optimum VG setpoint for the VG mechanism; and
adjusting the VG mechanism to the optimum VG setpoint,
**characterised in that** VG setpoints in a first
region of the compressor map are optimized based on a first optimization criterion, and VG setpoints in a second region of the compressor map are optimized based on a second optimization criterion.

2. The method of claim 1, wherein at least some of the VG setpoints in the VG setpoint map are optimized based on compressor efficiency as the predefined optimization criterion.

3. The method of claim 1, wherein the first optimization criterion comprises compressor efficiency.

4. The method of claim 1, wherein the second optimization criterion comprises compressor flow stability.

5. The method of claim 1, further comprising employing a predictive scheme to predict the location of the operating point on the compressor map when the VG mechanism reaches a new VG setpoint, taking into account a time lag required for adjusting the VG mechanism to the new VG setpoint.

6. The method of claim 1, wherein the VG mechanism is infinitely adjustable between the minimum and maximum flow area setpoints, and the predefined VG setpoint map is configured to accommodate such infinite adjustability.

7. The method of claim 1, wherein the VG mechanism is adjustable to only a plurality of discrete VG setpoints, and the predefined VG setpoint map is configured to accommodate such discrete adjustability.

8. The method of claim 7, further comprising the step of including hysteresis in regulating the VG setpoint.

9. A computer program product comprising computer-executable program code instructions to cause a compressor to execute the steps of the method of any preceding claim, said compressor comprising a variable-geometry mechanism connected to an actuator, sensors for determining a compressor pressure ratio and flow rate, and a control unit.

10. A computer-readable storage medium having stored thereon the computer program product of claim 9.

## Patentansprüche

1. Ein Verfahren zum Steuern eines Mechanismus mit variabler Geometrie (VG) für einen Verdichter, wobei der VG-Mechanismus so angeordnet ist, dass Fluid, das durch den VG-Mechanismus strömt, auch durch den Verdichter strömt und von diesem verdichtet wird, wobei der VG-Mechanismus einstellbar ist, um einen effektiven Strömungsbereich für das Fluid einzustellen, das durch den VG-Mechanismus und durch den Verdichter strömt, wobei der VG-Mechanismus zwischen einem minimalen Strömungsbereichssollwert und einem maximalen Strömungsbereichssollwert einstellbar ist und auf mindestens einen Zwischenströmungsbereichssollwert zwischen dem minimalen und dem maximalen Strömungsbereichssollwert einstellbar ist, wobei das Verfahren aufweist:
Vorbestimmen eines VG-Sollwertkennfeldes, das optimale VG-Sollwerte über einen Bereich von Verdichterdruckverhältnissen und über einen Bereich von verdichterkorrigierten Strömungsraten aufweist, wobei jeder VG-Sollwert einer eindeutigen Betriebspunktposition auf einem Verdichterkennfeld für den Verdichter entspricht und auf der Grundlage von mindestens einem vorbestimmten Optimierungskriterium für den Verdichter optimiert wird;
Bestimmen der Position eines Betriebspunktes des Verdichters auf dem Verdichterkennfeld;
Nachschlagen in dem VG-Sollwertkennfeld auf der Grundlage der Position des Betriebspunktes, um einen optimalen VG-Sollwert für den VG-Mechanismus zu bestimmen; und
Einstellen des VG-Mechanismus auf den optimalen VG-Sollwert,
**dadurch gekennzeichnet, dass** VG-Sollwerte in einem ersten Bereich des Verdichterkennfeldes auf der Grundlage eines ersten Optimierungskriteriums optimiert werden und VG-Sollwerte in einem zweiten Bereich des Verdichterkennfeldes auf der Grundlage eines zweiten Optimierungskriteriums optimiert werden.

2. Das Verfahren nach Anspruch 1, wobei zumindest einige der VG-Sollwerte in dem VG-Sollwertkennfeld auf der Grundlage der Effizienz des Verdichters als vorbestimmtes Optimierungskriterium optimiert werden.

3. Das Verfahren nach Anspruch 1, wobei das erste Optimierungskriterium die Effizienz des Verdichters aufweist.

4. Das Verfahren nach Anspruch 1, wobei das zweite Optimierungskriterium die Strömungsstabilität des Verdichters aufweist.

5. Das Verfahren nach Anspruch 1, ferner aufweisend das Anwenden eines Vorhersageschemas zum Vorhersagen der Position des Betriebspunktes auf dem Verdichterkennfeld, wenn der VG-Mechanismus einen neuen VG-Sollwert erreicht, wobei eine Zeitverzögerung berücksichtigt wird, die zur Einstellung des VG-Mechanismus auf den neuen VG-Sollwert erforderlich ist.

6. Das Verfahren nach Anspruch 1, wobei der VG-Mechanismus zwischen dem minimalen und dem maximalen Strömungsbereichssollwert stufenlos einstellbar ist und das vorbestimmte VG-Sollwertkennfeld dazu eingerichtet ist, eine solche stufenlose Einstellbarkeit zu ermöglichen.

7. Das Verfahren nach Anspruch 1, wobei der VG-Mechanismus nur auf eine Vielzahl von diskreten VG-Sollwerten einstellbar ist und das vorbestimmte VG-Sollwertkennfeld dazu eingerichtet ist, eine solche diskrete Einstellbarkeit zu ermöglichen.

8. Das Verfahren nach Anspruch 7, ferner aufweisend den Schritt der Einbeziehung der Hysterese in die Regelung des VG-Sollwerts.

9. Ein Computerprogrammprodukt, aufweisend computerausführbare Programmcodebefehle zum Bewirken eines Verdichters zum Ausführen der Schritte des Verfahrens nach einem der vorhergehenden Ansprüche, wobei der Verdichter einen Mechanismus mit variabler Geometrie, der mit einem Aktuator verbunden ist, Sensoren zum Bestimmen eines Verdichterdruckverhältnisses und einer Strömungsrate, und eine Steuereinheit aufweist.

10. Ein computerlesbares Speichermedium, auf dem das Computerprogrammprodukt nach Anspruch 9 gespeichert ist.

## Revendications

1. Procédé de commande d'un mécanisme à géométrie variable (GV) pour un compresseur, le mécanisme à GV étant situé de sorte que du fluide passant à travers le mécanisme à GV passe aussi à travers le compresseur et soit compressé par celui-ci, le mécanisme à GV étant ajustable pour ajuster une zone de flux effectif pour le fluide qui passe à travers le mécanisme à GV et à travers le compresseur, le mécanisme à GV étant ajustable entre un point de consigne de zone de flux minimum et un point de consigne de zone de flux maximum et étant ajustable à au moins un point de consigne de zone de flux intermédiaire entre les points de consigne de zone de flux minimum et maximum, le procédé comprenant :
la prédéfinition d'une carte de point de consigne à GV comprenant des points de consigne à GV optimum sur une plage de rapports de pression de compresseur et sur une plage de débits corrigés de compresseur, chaque point de consigne à GV correspondant à un emplacement de point opérationnel unique sur une carte de compresseur pour le compresseur, et étant optimisé sur la base d'au moins un critère d'optimisation prédéfini pour le compresseur ;
la détermination d'un emplacement d'un point opérationnel du compresseur sur la carte de compresseur ;
la consultation de la carte de point de consigne à GV sur la base de l'emplacement du point opérationnel de sorte à déterminer un point de consigne à GV optimum pour le mécanisme à GV; et
l'ajustement du mécanisme à GV au point de consigne à GV optimum,
**caractérisé en ce que** des points de consigne à GV dans une première région de la carte de compresseur sont optimisés sur la base d'un première critère d'optimisation, et des points de consigne à GV dans une seconde région de la carte de compresseur sont optimisés sur la base d'un second critère d'optimisation.

2. Procédé selon la revendication 1, dans lequel au moins certains des points de consigne à GV dans la carte de point de consigne à GV sont optimisés sur la base de l'efficience de compresseur comme le critère d'optimisation prédéfini.

3. Procédé selon la revendication 1, dans lequel le premier critère d'optimisation comprend l'efficience de compresseur.

4. Procédé selon la revendication 1, dans lequel le second critère d'optimisation comprend une stabilité de flux de compresseur.

5. Procédé selon la revendication 1, comprenant en outre l'emploi d'un schéma prédictif pour prédire l'emplacement du point opérationnel sur la carte de compresseur lorsque le mécanisme à GV atteint un nouveau point de consigne à GV, tenant compte d'un décalage requis pour l'ajustement du mécanisme à GV au nouveau point de consigne à GV.

6. Procédé selon la revendication 1, dans lequel le mécanisme à GV est ajustable de manière infinie entre les points de consigne de zone de flux minimum et maximum, et la carte de point de consigne à GV prédéfinie est configurée pour loger une telle plage d'ajustement infinie.

7. Procédé selon la revendication 1, dans lequel le mécanisme à GV est ajustable à seulement une pluralité de points de consigne à GV discrets, et la carte de point de consigne à GV prédéfinie est configurée pour loger une telle plage d'ajustement discrète.

8. Procédé selon la revendication 7, comprenant en outre l'étape d'inclusion d'une hystérèse dans la régulation du point de consigne à GV.

9. Produit de programme informatique comprenant des instructions de code de programme exécutables sur ordinateur pour amener un compresseur à exécuter les étapes du procédé selon l'une quelconque des revendications précédentes, ledit compresseur comprenant un mécanisme à géométrie variable relié à un actionneur, des capteurs pour la détermination d'un rapport de pression et débit de compresseur, et une unité de commande.

10. Support de stockage lisible sur ordinateur présentant le produit de programme informatique selon la revendication 9 stocké sur celui-ci.
